# EUROPÄISCHE PATENTSCHRIFT

(11) **EP 0 641 279 B1**
(45) Veröffentlichungstag und Bekanntmachung des Hinweises auf die Patenterteilung: **13.11.1996**
(21) Anmeldenummer: 93909972.7
(22) Anmeldetag: 12.05.1993
(51) Int. Cl.: B29C 49/30, B29C 49/32

(54) **BLASFORMMASCHINE**
BLOW MOULDING MACHINE
MACHINE A SOUFFLER

(30) Priorität: 15.05.1992 DE 9206649 U
(43) Veröffentlichungstag der Anmeldung: 08.03.1995
(73) Patentinhaber: MAUSER-WERKE GmbH, D-50321 Brühl (DE)
(72) Erfinder: LANGOS, Peter, D-5205 Sankt Augustin 1 (DE); HUMRICH, Uwe, D-5354 Weilerswist (DE)
(86) Internationale Anmeldenummer: EP9301186
(87) Internationale Veröffentlichungsnummer: WO9323232

(56) Entgegenhaltungen:
- GB-A- 1 096 548
- US-A- 3 068 511
- US-A- 3 749 541
- US-A- 4 959 191

## Beschreibung

Die Erfindung betrifft eine Blasformmaschine, die als Zwei-Stationen-Maschine ausgebildet ist, mit wenigstens einer Extrusionseinrichtung bzw. einem Speicherkopf, die zwei nebeneinander angeordnete Blasformen mit jeweils zwei horizontal verschiebbaren Blasformhälften mit einem schlauchartigen thermoplastischen Kunststoff-Vorformling versorgt, und mit einem Maschinen-Rahmen, auf dem die zwei Blasformen bzw. vier Blasformhälften verschiebbar gelagert sind.

Derartige Zwei-Stationen-Blasformmaschinen sind an sich bekannt. Solche Maschinen sind jedoch in aufwendiger, meist geschlossener Rahmenbauweise mit vier Holmen und zusätzlicher Abstützung der Antriebsvorrichtung als Fünf-Platten-System aufgebaut. Dies erfordert einen hohen Investitionsaufwand und eine komplizierte Steuerung von zwei separaten Schließeinrichtungen.
Eine ähnliche Blasformmaschine, bei der die mittlere Trägerplatte außenseitig jeweils eine Blasformhälfte der beiden Blasform-Stationen trägt, ist aus der GB-A-1 096 548 bekannt. Bei dieser 2-Stationen-Blasformmaschine mit einem über Querholme verbundenen 5-Platten-System sind zur Halterung bzw. Führung der die außenseitigen Blasformhälften tragenden Formaufspannplatten jeweils vier Querholme erforderlich. Die mittlere und die beiden außenseitigen, die Schließzylinder tragenden Rahmen-Platten sind fest auf einer unteren Bodenplatte angeordnet. Die Bodenplatte ist insgesamt und die darauf befestigten Bauteile sind daher immer nur gemeinsam fest miteinander verbunden horizontal verfahrbar. Die Schließkraftaufbringung erfolgt für jede Blasform-Station über einen großdimensionierten außenseitigen Schließzylinder, wobei der Kraftverlauf über die den Schließzylinder tragende außenseitige Rahmen-Platte, über den Zylinderkolben und die vier Querholme, über die, die außenseitige Blasformhälfte tragende und mit den Querträgern verbundene Formaufspannplatte, über die beiden Blasformhälften selbst, über die mittlere, die innenseitige Blasformhälfte tragende Festplatte und über die unten querverlaufende verschiebbare Bodenplatte mit der außenseitigen Rahmenplatte verläuft und schließlich geschlossen wird.

Es ist Aufgabe der vorliegenden Erfindung, eine leistungsfähige zwei-Stationen-Blasformmaschine anzugeben, die bei geringeren Investitions- und Betriebskosten auf eine hohe Produktionsleistung ausgelegt ist.
Dies wird erfindungsgemäß dadurch erreicht, daß der Maschinen-Rahmen in offener, holmenloser Bauweise ausgebildet ist, und zur Aufspannung der vier Blasformhälften ein reines Drei-Platten-System mit drei Formaufspannplatten vorgesehen ist, bei dem die mittlere Formaufspannplatte jeweils eine Blasformhälfte trägt, und wobei jede der drei Formaufspannplatten auf einem verschiebbar gelagerten Lagerbock befestigt ist.
Durch diese schlanke Bauweise werden auf jegliche, sonst übliche Stützrahmen bzw. horizontale Tragholme verzichtet; hierdurch werden Investitions- und Platzbedarf vermindert. Die erhöhte Beweglichkeit der jeweils auf den verschiebbaren Lagerböcken befestigten Formaufspannplatten bzw. Blasformhälften senkt durch Verminderung der bewegten Massen ganz erheblich die Betriebskosten und steigert die erreichbare Stückzahl (Output) der geblasenen Hohlkörper.

Eine gute Handhabbarkeit der Maschine mit uneingeschränkter Produktentnahmemöglichkeit ohne hinderliche Querstreben wird in vorteilhafter Weise insbesondere dadurch erreicht, daß der als Tischrahmen ausgebildete Maschinenrahmen ausschließlich unterhalb der Blasformhälften bzw. der Formaufspannplatten angeordnet ist, wobei zur verschiebbaren Führung der drei einzelnen Lagerböcke am Tischrahmen seitliche Schienen vorgesehen sind.

Dabei ist für die Horizontalbewegung bzw. schnelle Vorschub-Schließbewegung der jeweils beiden Blasformhälften auf verblüffend einfache Weise lediglich ein einziger Fahrzylinder vorgesehen, dessen Kolbenstange beidseitig im Maschinenrahmen befestigt ist, während für die letzte Verriegelungsbewegung der jeweiligen Blasformhälften in ihre endgültige Verriegelungsposition an den Formaufspannplatten jeweils eigene Verriegelungseinheiten aus kleinen Schließzylindern mit gegenüberliegenden Verriegelungszapfen angeordnet sind. Bei kleineren Produkten wie z.B. einem 10 l-Kanister genügt es dabei, wenn in der Mitte einer jeweiligen Blasform in halber Höhe nebeneinander zwei Schließzylinder mit Verriegelungszapfen (wie in den Zeichnungen dargestellt ist) vorgesehen sind.
Bei größeren Blasprodukten (z.B. einem 220 l Faß) und größeren Blasdrücken bzw. auftretenden Kräften sind zweckmäßigerweise in allen vier Eckbereichen einer jeden Formaufspannplatte die jeweiligen Schließzylinder und Verriegelungszapfen angebracht.

In Ausgestaltung der Erfindung ist vorgesehen, daß die Wirkungsverbindung des einzigen Fahrzylinders mit den jeweiligen zu betätigenden Blasformhälften über eine Kupplungseinheit realisiert wird, die vorzugsweise als Hydraulikzylinder mit in die Zahnstangen der Gleichlaufeinrichtungen einkuppelbarem bzw. verschiebbarem Zahnritzel ausgebildet ist. Hierdurch wird mit einfachstem Mittelaufwand ein betriebsgünstiges Bewegungssystem für eine 2-Stationen-Blasformmaschine bereitgestellt.

Das erfindungsgemäße Drei-Platten-System bietet folgende Vorteile:
- offene, rahmenlose Bauweise, Verzicht auf schwere Rahmenkonstruktion, da innerhalb der Formaufspannplatten jeweils ein in sich geschlossenes Kraftsystem vorhanden ist;
- gezielte Einleitung der Schließkräfte in die Blaswerkzeughälften,
- keine störenden Querträger oder Holme z.B. bei Produktentnahme, Werkzeugwechsel oder Reparaturarbeiten,
- kleine Baugruppen mit geringen bewegten Massen, somit geringer Kraftbedarf bei schnellen Vorschubbewegungen,
- geringer Verschleiß der bewegten Teile,
- Minimierung der Anzahl von Bauteilen,
- kompakte Bauweise,
- Beweglichkeit der gesamten Anlage,
- Minimierung der Maschinengröße und des erforderlichen Platzbedarfs in der Produktionshalle,
- Erhöhung der Produktionsleistung bei vermindertem Investitionsbedarf,
- bedienungsfreundliche Handhabung (Steuerung) der Maschine,
- niedrige Betriebskosten und
- Möglichkeit einer gleichzeitigen Herstellung von zwei verschiedenen Produkten.

Als Besonderheit ist die gesamte Drei-Stationen-Blasformmaschine insgesamt vollständig verfahrbar ausgebildet. Dies erfolgt beispielsweise über Schienen im Fundament und Räder unter dem Maschinen-Grundrahmen. Die Verschiebe-Räder für die gesamte Maschineneinheit sind dann zweckmäßigerweise mit einem eigenen Antriebsmotor ausgestattet. Diese Ausführung ist besonders bei einem Formen- oder Düsenwechsel sehr vorteilhaft, weil es die Zugänglichkeit erheblich verbessert.

Die Erfindung wird nachfolgend anhand eines in den Zeichnungen schematisch dargestellten Ausführungsbeispieles näher erläutert und beschrieben. Es zeigen:
- Figur 1: eine erfindungsgemäße Zwei-Stationen-Blasformmaschine,
- Figur 2, 3 und 5 bis 9: verschiedene Positionsstellungen der Zwei-Stationen-Blasformmaschine,
- Figur 4: in schematischer Darstellung die Gleichlaufeinrichtung der Blasformmaschine und
- Figur 10: eine Ansicht der Blasformmaschine beim Ausbau einer Blasform.

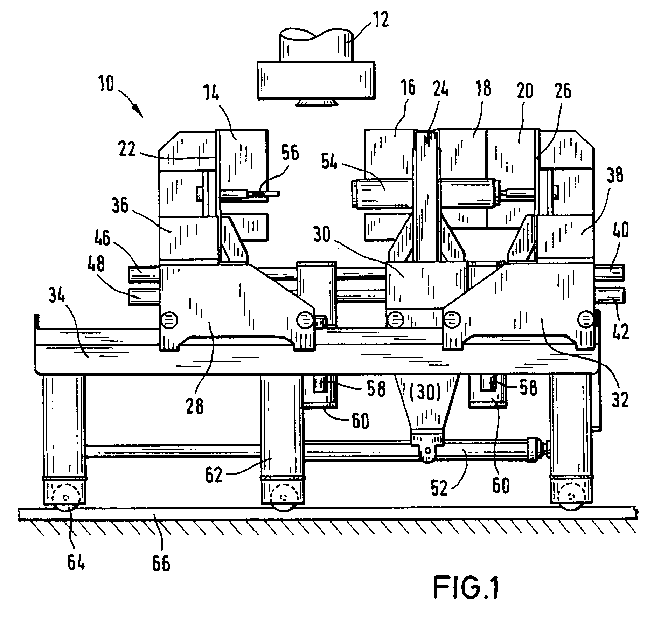

In Figur 1 ist mit der Bezugsziffer 10 eine erfindungsgemäße Zwei-Stationen-Blasformmaschine mit einem Drei-Platten-System zur Aufspannung von vier Blasformhälften 14, 16;18,20 bezeichnet. Zentralmittig oberhalb der Blasformmaschine 10 ist eine Extrusionseinrichtung 12 angedeutet, welche die zwei nebeneinander angeordneten horizontal verschiebbaren Blasformen mit einem aus einer Ringdüse extrudierten schlauchförmigen Vorformling aus thermoplastischem Kunststoff zum Erblasen von Kunststoff-Hohlkörpern wie z.B. Kanister, großvolumige Fässer (Deckelfässer, Spundfässer o.ä.) versorgt. Für eine kontinuierliche Betriebsweise kann der schlauchförmige Vorformling z.B. auch kontinuierlich extrudiert werden.
Für eine diskontinuierliche Betriebsweise wird der schlauchförmige Vorformling intermittierend aus einer Extrusionseinrichtung mit entsprechendem Speicherkopf ausgestoßen.

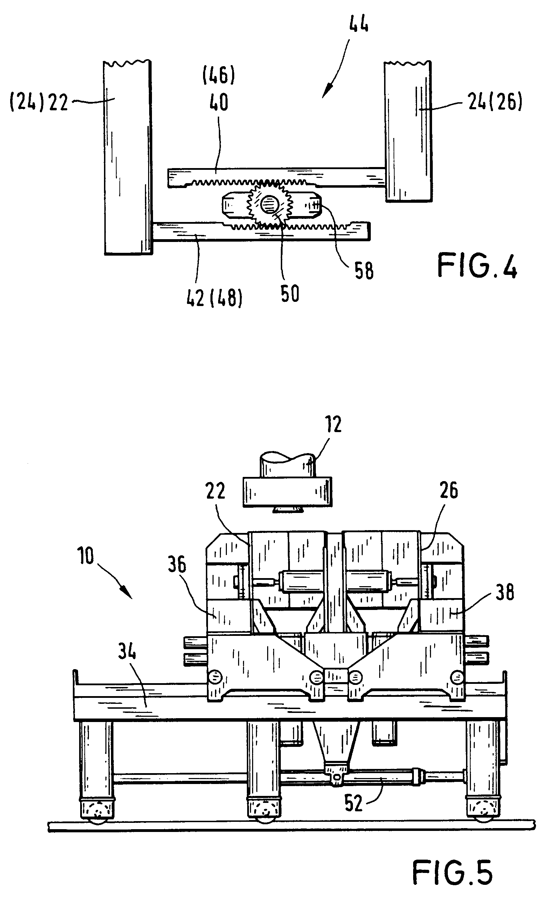

Die vier Blasformhälften 14,16 und 18,20 sind auf drei Formaufspannplatten 22,24 bzw. 24,26 leicht lösbar befestigt bzw. aufgespannt, wobei die mittlere Formaufspannplatte 24 auf der Vorder- und Rückseite jeweils eine Blasformhälfte 16 und 18 trägt.
Die drei Formaufspannplatten 22,24,26 sind auf Lagerböcken 28,30,32 auf einem als flachem Tischrahmen 34 ausgebildeten Maschinen-Grundrahmen horizontal verschiebbar gelagert.
Anders als bei einer bisher bekannten Zwei-Stationen-Blasformmaschine ist hier der Maschinen-Grundrahmen als Tischrahmen 34 ausschließlich unterhalb der Blasformen bzw. den Lagerböcken 28,30,32 der Formaufspannplatten 22,24,26 zur Halterung bzw. Aufspannung der Blasformhälften 14,16;18,20 angeordnet.
Die Lagerböcke 28,30,32 sind z.B. mittels Rollen auf jeweils seitlich am Tischrahmen 34 vorgesehenen Schienen oder Führungsholmen verschiebbar geführt.
Die beiden äußeren Formaufspannplatten 22 und 26 stützen sich noch zusätzlich über jeweils eine außenseitige Abstützung 36,38 auf den beiden äußeren Lagerböcken 28 und 32 ab.
Zur Gleichlaufführung der Lagerböcke 28,30,32 bzw. der dazugehörigen Blasformhälften sind zwei kleine jeweils mittig unter einer jeden Blasform angeordnete hydraulische Zentrierzylinder 58 vorgesehen. Die hydraulisch betätigbaren Zentrierzylinder 58 sind z.B. seitlich neben der ebenfalls immer mittig in der Formtrennebene angeordneten Blasdornvorrichtung 60 angeordnet, wie in Fig. 1 angedeutet ist. Es ist im normalen Betriebszustand immer nur ein Zahnrad 50 mittels des jeweiligen Zentrierzylinders 58 in Wirkungseingriff gesetzt. Die Zentrierzylinder 58 der Gleichlaufführung stehen mit der Gleichlaufeinrichtung 44 in Wirkungsverbindung; die Gleichlaufeinrichtung 44 besteht hier z.B. aus einem Zahnstangen-Ritzel-System mit einer rechten und einer linken Zahnstange 40,42 bzw. 46,48 und einem dazwischen angeordneten Zahnrad 50 bzw. Ritzel, wie in Figur 4 schematisch dargestellt ist. Dabei ist jeweils eine Zahnstange 40,42 bzw. 46,48 fest mit jeweils einer Formaufspannplatte 22 und 24 bzw. 24 und 26 verbunden. Die beiden Zahnstangen können selbstverständlich auch übereinander/untereinander angeordnet sein.

Durch Betätigung der Zentrierzylinder wird zum Beispiel das Zahnrad 50 der Gleichlaufeinrichtung 44 in Eingriff mit den beiden Zahnstangen 46,48 gebracht oder durch Verschieben (Auskuppeln) außer Funktion gesetzt.
Für die Horizontalbewegung bzw. schnelle Schließbewegung (Schnell-Vorschub) der jeweils beiden Blasformhälften 14, 16 und 18,20 ist lediglich ein einziger mittig im Tischrahmen 34 angeordneter hydraulischer Fahrzylinder 52 vorgesehen, der mit dem mittleren, nach unten verlängerten Lagerbock 30 verbunden bzw. an diesen angekoppelt ist. Es wird also von dem Fahrzylinder 52 direkt immer nur der mittlere Lagerbock 30 mit der mittleren Formaufspannplatte 24 und den beiden darauf befestigten Blasformhälften 16,18 verschoben. Dabei ist die außenseitige Blasformhälfte 14 oder 20 der jeweils geschlossenen Blasform mittels der jeweils eigenen separaten Verriegelungseinheit an die innenseitige Blasformhälfte 16 oder 18 angekoppelt, während der Zentrierzylinder der geschlossenen Blasform die Gleichlaufeinrichtung außer Funktion gesetzt hat. Bei der geöffneten Blasform ist die Gleichlaufeinrichtung über das mittels Zentrierzylinder eingekuppelte Ritzel in Funktion gesetzt und die Bewegung der angetriebenen innenseitigen Blasformhälfte 16 oder 18 (über Formaufspannplatte 24 bzw. Lagerbock 30 bzw. Fahrzylinder 52) wird relativ dazu von der gegenüberliegenen außenseitigen Blasformhälfte 14 oder 20 gleichfalls in entgegengesetzter Richtung ausgeführt.
Für die letzte Verriegelungsbewegung der jeweiligen Blasformhälften 14,16 und 18,20 in ihre Verriegelungsposition sind dann an den Formaufspannplatten 22,24,26 jeweils eigene Verriegelungseinheiten aus kleinem Schließzylinder 54 mit gegenüberliegendem Verriegelungszapfen 56 angeordnet.
Mittig unter jeder Blasform ist jeweils im Tischrahmen 34 eine Blasdornvorrichtung 60 mit entsprechendem Spreizdorn und Blasdorn angeordnet. Spreizdorn und Blasdorn sind in bekannter Weise relativ zueinander verschiebbar, nämlich zusammengefahren zum Überstülpen des Vorformlings und auseinandergespreizt beim Zufahren der Blasformhälften.
Bei dem Antrieb der Blasformhälften mittels Fahrzylinder 52 ist besonders herauszustellen, daß die Kolbenstange beidseitig fest im Rahmen montiert ist und der Fahrzylinder 52 als bewegliches Teil hydraulisch verfahrbar auf der festen Kolbenstange verfahrbar ausgebildet ist.

Der Tischrahmen 34 steht auf zwei bzw. hier drei Rahmenbeinen 62. In bevorzugter Ausführung sind die Rahmenbeine 62 unten mit Rollen oder Rädern 64 ausgerüstet und die gesamte Blasformmaschine 10 ist auf Schienen 66 oder auf andere Weise verfahrbar bzw. verschiebbar ausgebildet. Für die Verschiebefunktion der gesamten Anlage können die Räder 64 mit einem besonderen Linearantrieb (z.B. Elektromotor) versehen sein.

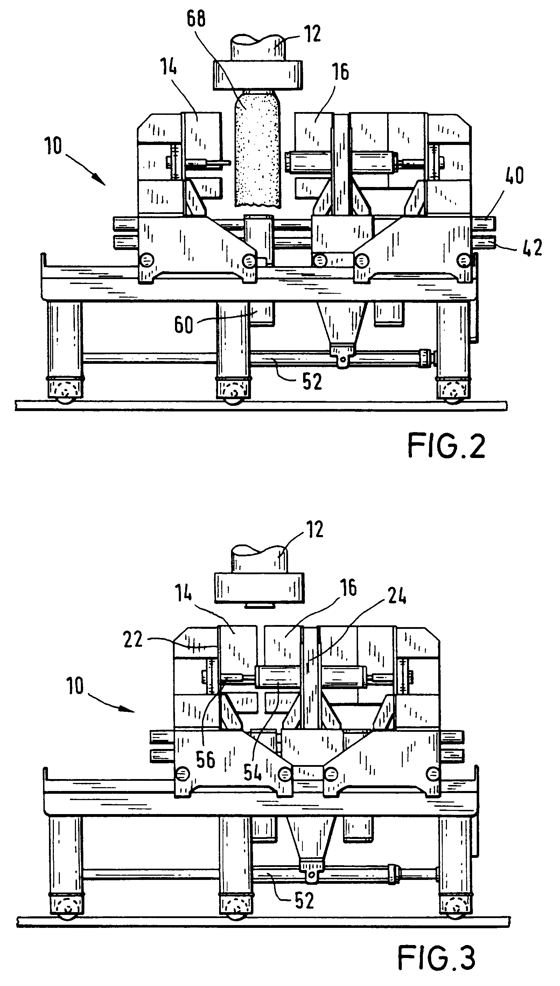

Die Funktionsweise der Zwei-Stationen-Blasformmaschine wird aus den nachfolgenden Zeichnungen deutlich:
Im Betrieb der Maschine bleibt nach dem neuen Steuerungskonzept immer eine Station geschlossen, während die andere Station verfahren bzw. bewegt wird.
So ist in Figur 2 die rechte Station geschlossen, während die beiden Blasformhälften 14,16 der linken Station vollständig geöffnet sind. Nach dem Ausstoßen des schlauchartigen Vorformlinges 68 aus der Extrusionseinrichtung 12 und dem Schlauchaufspreizen mittels Spreizdorn und Blasdorn der Blasdornvorrichtung 60 erfolgt das schnelle Schließen der linken Station bis in die Position "Schließverzögerung". Dies geschieht mittels des mittig unter der Blasdornvorrichtung 60 angeordneten hydraulischen Fahrzylinders 52. Zwei kleine mittig bzw. jeweils in der Blasformtrennebene neben der Blasdornvorrichtung 60 angeordnete hydraulische Zentrierzylinder 58 halten die Gleichlaufführungen in Position. Die Gleichlaufführungen arbeiten z.B. nach dem bekannten Zahnstangen-Ritzel-System.

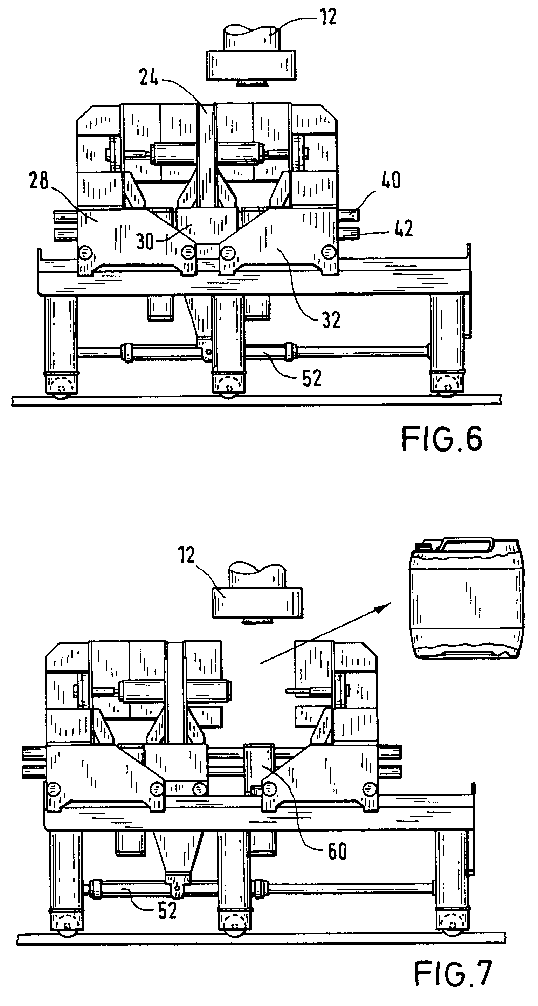

Sobald die Position "Schließverzögerung" - dargestellt in Figur 3 - erreicht ist, übernehmen die an den Formaufspannplatten 22 und 24 angeordneten Schließzylinder 54 und Verriegelungszapfen 56 die unter großer Kraftaufwendung mit Abquetschen des Schlauches erfolgende verzögerte Verriegelungsbewegung und halten die Blasform dann gegen den auftretenden Blasdruck zu. Wie in Figur 5 dargestellt ist, sind nun beide Stationen geschlossen.
Nach dem Entriegeln der beiden Zentrierzylinder 58 werden beide Stationen, welche mit den Lagerböcken 28,30,32 rollend auf dem Tischrahmen 34 gelagert sind, mittels des Fahrzylinders 52 so positioniert, daß nun wieder die rechte Station unter dem Speicherkopf 12 zu stehen kommt, wie in Figur 6 dargestellt ist. Die Zentrierzylinder fixieren dabei die Gleichlaufführung. Nach Ablauf der Blaszeit und Entriegelung der Verriegelungseinheiten wird die rechte Station zur Entnahme des fertig gebla-senen Hohlkörpers mittels des Fahrzylinders geöffnet, wie in Figur 7 dargestellt ist. Sobald der erblasene Hohlkörper, hier ein Kanister, aus der Blasform entnommen ist, erfolgt erneut ein Ausstoß des schlauchartigen thermoplastischen Kunststoff-Vorformlinges aus der Ringdüse der Extrusionseinrichtung 12 und die weiteren Funktionen laufen wie bei der linken Station zuvor beschrieben ab.

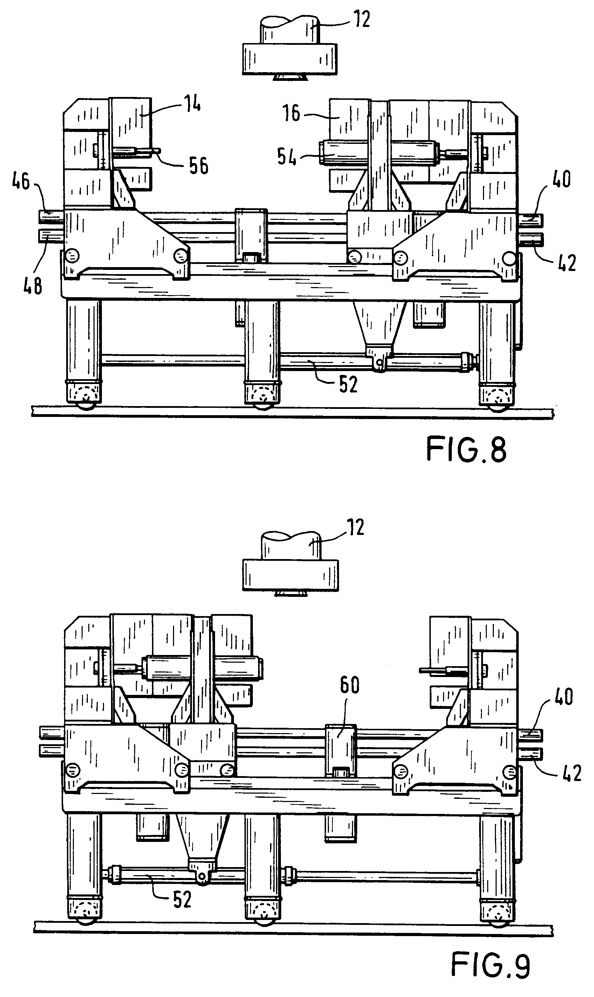

Zwecks besserer Zugänglichkeit, z.B. für Wartungszwecke kann der betriebsbedingte normale Öffnungsweg bis zur "Öffnungs-Position" der jeweils beiden Formhälften erheblich vergrößert werden. Hierbei werden die beiden Zentrierzylinder 58 außer Funktion gesetzt. Durch Betätigung des Fahrzylinders 52 kann wahlweise die linke Station - wie in Figur 8 dargestellt ist - oder die rechte Station - wie in Figur 9 dargestellt ist - noch weitergehend in eine "Wartungs-Position" voll geöffnet werden. Voraussetzung dafür ist eine entsprechende Länge der Laufschienen für die Lagerböcke.

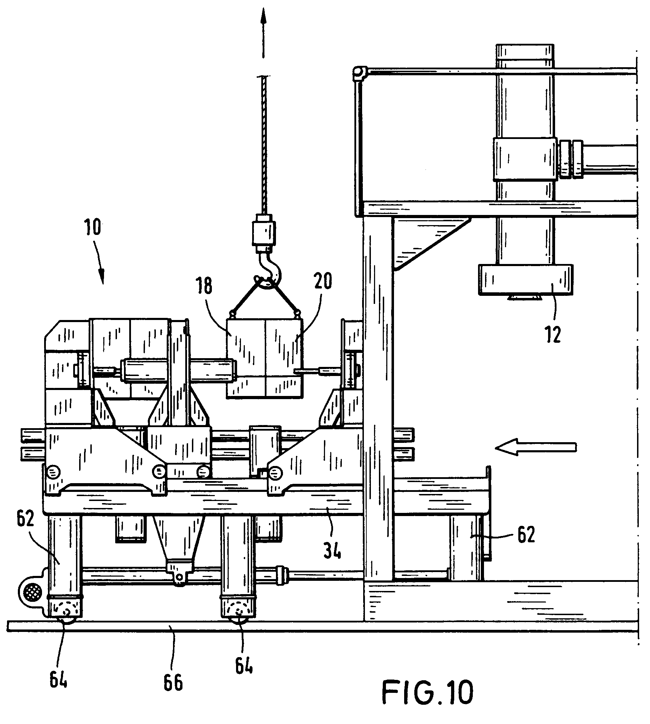

Wie aus Figur 10 deutlich wird, ist die gesamte Zwei-Stationen-Blasformmaschineneinheit mitsamt dem unteren Grundrahmen 34 verfahrbar ausgebildet. Dies erfolgt z.B. über Schienen 66 im Fundament und Rädern 64 unter den Rahmenbeinen 62 des Grundrahmens 34. Dies ist insbesondere vorteilhaft bei einem Austausch einer Blasform oder z.B. bei einem Düsenwechsel in der Extrusionseinrichtung 12. In Fig. 10 werden gerade die beiden Blasformhälften 18,20 der rechten Station mittels eines Kranhakens ausgebaut. Dazu ist die Blasformmaschineneinheit unter der Extrusionseinrichtung 12 herausgefahren worden.
Die Verfahrbarkeit der Blasformmaschineneinheit könnte z.B. auch dazu genutzt werden, die Blasformen wechselweise unter zwei nebeneinander angeordneten Extrusionsdüsen bzw. Speicherköpfen in Position zu bringen.
Prinzipiell könnten auf der Zwei-Stationen-Blasformmaschine gleichzeitig zwei verschiedene Typen von Hohlkörpern, so z.B. ein 60 l-Fassett mit seitlichen Fallgriffen in der linken Station und ein 60 l-Standard-Deckelfaß in der rechten Station hergestellt werden. Aber auch beliebige andere Behälterformen selbst mit unterschiedlicher Behältergröße (z.B. ein 150 l konisches Deckelfaß und ein 160 l Spundfaß) sind auf der neuen Blasformmaschine gleichzeitig herstellbar. Bei Ausstattung der Anlage mit einem zweiten Extruder bzw. Speicherkopf könnten auch verschiedenfarbige oder aus verschiedenem Kunststoffmaterial bestehende Behälter erblasen werden.

Aus obiger Beschreibung und den Zeichnungsfiguren wird die vorteilhafte Ausgestaltung der erfindungsgemäßen Zwei-Stationen-Blasformmaschine mit dem neuartigen Drei-Platten-System deutlich.

### BEZUGSZIFFERNLISTE

- 10: Zwei-Stationen-Maschine
- 12: Extrusionseinrichtung
- 14: Blasformhälfte - linke Station
- 16: Blasformhälfte - linke Station
- 18: Blasformhälfte - rechte Station
- 20: Blasformhälfte - rechte Station
- 22: linke Formaufspannplatte
- 24: mittlere Formaufspannplatte
- 26: rechte Formaufspannplatte
- 28: linker Lagerbock
- 30: mittlerer Lagerbock
- 32: rechter Lagerbock
- 34: Tischrahmen (Grundrahmen)
- 36: linke Formaufspannplatten-Abstützung
- 38: rechte Formaufspannplatten-Abstützung
- 40: obere Zahnstange (rechte Station)
- 42: untere Zahnstange (rechte Station)
- 44: Gleichlaufeinrichtung
- 46: obere Zahnstange (linke Station)
- 48: untere Zahnstange (linke Station)
- 50: Zahnrad (Ritzel)
- 52: Fahrzylinder
- 54: Schließzylinder
- 56: Verriegelungszapfen
- 58: Zentrierzylinder für (44)
- 60: Blasdornvorrichtung
- 62: Rahmenbeine
- 64: Rollen (Räder)
- 66: Schienen
- 68: Kunststoff-Vorformling

## Patentansprüche

1. Blasformmaschine als Zwei-Stationen-Maschine (10), mit wenigstens einer Extrusionseinrichtung (12), ggf. mit einem Speicherkopf, die zwei nebeneinander angeordnete Blasformen aus zwei horizontal verschiebbaren Blasformhälften (14,16;18,20) mit einem schlauchartigen thermoplastischen Kunststoff-Vorformling (68) versorgt, mit einem Maschinen-Rahmen (34), auf dem die zwei Blasformen bzw. vier Blasformhälften (14,16;18,20) verschiebbar gelagert sind,
**dadurch gekennzeichnet**, daß
der Maschinen-Rahmen (34) in offener, holmenloser Bauweise ausgebildet ist und zur Aufspannung der vier Blasformhälften (14,16;18,20) ein reines Drei-Platten-System mit drei Formaufspannplatten (22,24,26) vorgesehen ist, bei dem die mittlere Formaufspannplatte (24) jeweils eine Blasformhälfte (16,18) trägt, und wobei jede der drei Formaufspannplatten (22,24,26) auf einem verschiebbar gelagerten Lagerbock (28,30,32) befestigt ist.

2. Blasformmaschine nach Anspruch 1,
**dadurch gekennzeichnet**, daß
der als Tischrahmen (34) ausgebildete Maschinenrahmen ausschließlich unterhalb der Blasformhälften (14,16,18,20) bzw. Formaufspannplatten (22,24,26) angeordnet ist, wobei zur verschiebbaren Führung der einzelnen Lagerböcke (28,30,32) am Tischrahmen (34) seitliche Schienen vorgesehen sind.

3. Blasformmaschine nach Anspruch 1 oder 2,
**dadurch gekennzeichnet**, daß
für die Horizontalbewegung bzw. schnelle Vorschub-Schließbewegung der jeweils beiden Blasformhälften (14,16) und (18,20) lediglich ein einziger Fahrzylinder (52) vorgesehen ist, und für die letzte Verriegelungsbewegung der jeweiligen Blasformhälften (14,16;18,20) in ihre endgültige Verriegelungsposition an den Formaufspannplatten (22,24,26) jeweils eigene Verriegelungseinheiten aus kleinem Schließzylinder (54) mit gegenüberliegendem Verriegelungszapfen (56) angeordnet sind.

4. Blasformmaschine nach Anspruch 3,
**dadurch gekennzeichnet**, daß
die Wirkungsverbindung des Fahrzylinders (52) mit den jeweiligen Blasformhälften (14,16 oder 18,20) über eine Kupplungseinheit realisiert wird, die vorzugsweise als hydraulisch betätigter Zentrierzylinder (58), mit in die Zahnstangen (46,48) der Gleichlaufeinrichtung (44) einkuppelbarem bzw. verschiebbarem Zahnritzel (50) ausgebildet ist.

5. Blasformmaschine nach Anspruch 1, 2, 3 oder 4,
**dadurch gekennzeichnet**, daß
eine Blasform unter normalen Betriebsbedingungen immer über eine jeweilige Verriegelungseinheit geschlossen ist, während die andere Blasform geöffnet ist bzw. ihre Blasformhälften (14,16;18,20) eine Schließ- oder Öffnungsbewegung ausführen, wobei die erste Blasform durch die Koppelung über die gemeinsame mittlere Formaufspannplatte (24) immer die Verschiebebewegung der auf der anderen Seite der mittleren Formaufspannplatte (24) angeordneten Blasformhälfte (16,18;18,16) mitvollzieht.

6. Blasformmaschine nach Anspruch 1, 2, 3, 4 oder 5,
**dadurch gekennzeichnet**, daß
die Blasformhälften (14,16;18,20) über die normale betriebsbedingte "Öffnungs-Position" hinaus bis in eine noch weiter geöffnete "Wartungs-Position" verfahrbar ausgebildet sind.

7. Blasformmaschine nach Anspruch 1, 2, 3, 4, 5 oder 6
**dadurch gekennzeichnet**, daß
die gesamte Zwei-Stationen-Maschine (10) mitsamt Maschinen-Rahmen (34) verfahrbar ausgebildet und ggf. mit einem besonderen separaten Antrieb dafür ausgestattet ist.

## Claims

1. A blow-moulding machine in the form of a two-station machine (10), with at least one extrusion device (12), optionally with a storage head and supplying a tube-like thermoplastic pre-moulded blank (68) of plastics material to two adjacent blow moulds comprising two horizontally displaceable blow-mould halves (14, 16; 18, 20), and with a machine frame (34) on which the two blow moulds or four blow-mould halves (14, 16; 18, 20) are displaceably mounted, **characterized in that** the machine frame (34) is constructed in an open design without crossheads, and a pure three-plate system with three mould-clamping plates (22, 24, 26) is provided, in which the middle mould-clamping plate (24) supports a respective blow-mould half (16, 18), in order to clamp the four blow-mould halves (14, 16; 18, 20), wherein each of the three mould-clamping plates (22, 24, 26) is secured to a displaceably mounted support (28, 30, 32).

2. A blow-moulding machine according to Claim 1, **characterized in that** the machine frame constructed in the form of a table frame (34) is arranged exclusively below the blow-mould halves (14, 16; 18, 20) or the mould-clamping plates (22, 24, 26) respectively, wherein lateral rails are provided on the table frame (34) in order to guide the individual supports (28, 30, 32) in a displaceable manner.

3. A blow-moulding machine according to Claim 1 or 2, **characterized in that** only a single travelling cylinder (52) is provided for the horizontal movement or rapid advance-closure movement of the two blow-mould halves (14, 16) and (18, 20) respectively, and, for the last locking movement of the respective blow-mould halves (14, 16; 18, 20) into their final locking position, separate locking units comprising a small closing cylinder (54) with an opposed locking pin (56) are arranged respectively on the mould-clamping plates (22, 24, 26).

4. A blow-moulding machine according to Claim 3, **characterized in that** the travelling cylinder (52) is operatively connected to the respective blow-mould halves (14, 16 or 18, 20) by way of a coupling unit preferably constructed in the form of an hydraulically actuated centring cylinder (58) with a toothed pinion (50) engageable or displaceable into the toothed racks (46, 48) of the synchronizing device (44).

5. A blow-moulding machine according to Claim 1, 2, 3 or 4, **characterized in that** under normal operating conditions one blow mould is always closed by way of a respective locking unit, while the other blow mould is opened or the blow-mould halves (14, 16; 18, 20) thereof perform an opening or closing movement, wherein as a result of the coupling by way of the common middle mould-clamping plate (24) the first blow mould always jointly performs the displacement movement of the blow-mould half (16, 18; 18, 16) arranged on the other side of the middle mould-clamping plate (24).

6. A blow-moulding machine according to Claim 1, 2, 3, 4 or 5, **characterized in that** the blow-mould halves (14, 16; 18, 20) are constructed so as to be movable beyond the normal "opening position" required for operation into a "maintenance position" opened still further.

7. A blow-moulding machine according to Claim 1, 2, 3, 4, 5 or 6, **characterized in that** the entire two-station machinie (10) together with the machine frame (34) is movable and is optionally provided with a special separate drive therefor.

## Revendications

1. Machine de moulage par soufflage, constituée d'une machine à deux postes de travail (10), comportant au moins un dispositif d'extrusion (12) qui est pourvu en tant que de besoin d'une tête accumulatrice et qui alimente, par une ébauche tubulaire en matière synthétique thermoplastique, deux moules de soufflage disposés l'un à côté de l'autre, composés chacun de deux moitiés déplaçables horizontale-ment, et, un bâti de machine (34) sur lequel sont montés les moules de soufflage, respectivement les quatre moitiés de moule (14,16), (18,20) déplaçables, *caractérisée en ce que* le bâti de machine (34) est de construction ouverte sans longeron et *que* pour la fixation des quatre moitiés de moule (14,16), (18,20) est prévu un système à trois plaques comportant trois plaques de fixation de moule (22, (24), (26), dont la plaque médiane (24) porte une moitié (16), (18) de chaque moule, chacune des trois plaques de fixation de moule (22), (24), (26) étant fixée sur un support (28), (30), (32) déplaçable.

2. Machine de moulage par soufflage selon la revendication 1 *caractérisée en ce que* le bâti de machine (34) présentant la conformation d'un cadre de table est disposé exclusivement en dessous des moitiés de moule (14,16), (18,20), respectivement des plaques de fixation des moules (22), (24), (26), le mouvement de déplacement de chacun des supports (28), (30), (32) s'effectuant dans des rails de guidage latéraux prévus sur le bâti de machine (34).

3. Machine de moulage par soufflage selon les revendications 1 ou 2 *caractérisée en ce que* le déplacement horizontal, respectivement le mouvement rapide de fermeture des deux moitiés de moule (14,16) et (18,20), est assuré par un seul cylindre (52) de transport et *que* le déplacement final des moitiés de moule (16,18) et (18,20) dans leur position de verrouillage est assuré par des unités de verrouillage propres, prévues sur les plaques de fixation de moules (22), (24), (26) et composées d'un petit cylindre de fermeture (54) et d'un tenon de verrouillage (56) lui faisant face.

4. Machine de moulage par soufflage selon la revendication 3 *caractérisée en ce que* la coopération entre le cylindre de transport (52) et la moitié de moule (14,16) et (18,20) est réalisée par un dispositif d'accouplement constitué de préférence d'un cylindre de centrage (58) hydraulique avec un pignon (50) s'engageant, respectivement se déplaçant dans des crémaillères (46), (48) d'un dispositif de synchronisation (44).

5. Machine de moulage par soufflage selon les revendications 1, 2, 3 ou 4 *caractérisée en ce qu'* en cas de conditions normales de fonctionnement, un moule est toujours fermé par une unité de verrouillage correspondante, tandis que l'autre moule est ouvert, respectivement les moitiés de moule (14,16) et (18,20) effectuent un mouvement de fermeture ou d'ouverture, et *en ce que* grâce à l'accouplement par l'intermédiaire de la plaque médiane de fixation commune (24), le premier moule effectue toujours simultanément le mouvement de déplacement de la moitié de moule (16,18) et (18,16) disposée sur l'autre face de ladite plaque de fixation médiane (24).

6. Machine de moulage par soufflage selon les revendications 1 2, 3, 4 ou 5 *caractérisée en ce que* les moitiés de moule (14,16) et (18,20) peuvent être déplacées au-delà de leur position d'ouverture normale impliquée par le fonctionnement, jusque dans une « position d'entretien » encore plus ouverte.

7. Machine de moulage par soufflage selon les revendications 1, 2, 3, 4, 5 ou 6 *caractérisée en ce que* toute la machine à deux postes de travail (10), y compris le bâti de machine (34), est déplaçable et à cette fin équipée en tant que de besoin d'une commande spéciale.
